# EUROPÄISCHE PATENTANMELDUNG

(11) **EP 0 798 537 A2**
(43) Veröffentlichungstag der Anmeldung: **01.10.1997**
(21) Anmeldenummer: 97104353.4
(22) Anmeldetag: 14.03.1997
(51) Int. Cl.: G01B 11/30

(54) **Verfahren und Einrichtung zum Messen von Oberflächenwelligkeiten**

(30) Priorität: 27.03.1996 DE 19612093
(71) Anmelder: Fried. Krupp AG Hoesch-Krupp, 45143 Essen (DE)
(72) Erfinder: Schatz, Dieter, 40882 Ratingen (DE)

(57) **Zusammenfassung**

Um ein Verfahren zum Messen von Oberflächenwelligkeiten an glänzenden ebenen Materialien, bei dem die zu messende Oberfläche mit einer Lichtquelle bestrahlt wird, wobei die von der Oberfläche reflektierten Lichtstrahlungen von einer Kamera aufgenommen und die umgewandelten Bildsignale von einer nachgeschalteten Auswerteeinheit verarbeitet werden und die Lichtstrahlung mindestens einen scharfkantigen und stark kontrastierten Hell-Dunkel-Übergang aufweist und der Hell-Dunkel-Übergang linienförmig ausgebildet ist, wobei der oder die scharfkantigen und stark kontrastierten Hell-Dunkel-Übergänge durch ein zwischen der Lichtquelle und der Oberfläche angeordnetes Streifengitter erzeugt werden, zu schaffen, das frei von subjektiven Einflüssen auch während eines Produktionsprozesses im On-line-Betrieb eine automatische und kontinuierliche Messung der Welligkeit erlaubt, sind die Gitterfreiräume des Streifengitters von einem das Licht der Lichtquelle diffus streuenden Material ausgefüllt.

## Beschreibung

Die Erfindung betrifft ein Verfahren nach dem Oberbegriff des Anspruchs 1 sowie eine Einrichtung zur Durchführung des Verfahrens nach Anspruch 2.

Bei den glänzenden Materialien handelt es sich um Materialien, deren Rauhigkeitsamplituden merklich unter den Welligkeitsamplituden liegen, wie z.B. bei kaltgewalzten Stahlbändern. Bei deren Herstellung entstehen in den einzelnen Umformschritten prozeßbedingt unterschiedlich ausgeprägte Welligkeiten in Walzrichtung (Rilligkeit) und quer zur Walzrichtung (Coilkbreaks). Je nach Verwendungszweck und Umgebungsbedingungen für den späteren Einsatz ist diese visuell wahrnehmbare Welligkeit ein Qualitätsmerkmal für das Material.

Die Welligkeit, die mit bloßem Auge sichtbar ist, wird bislang manuell an Probenstücken geprüft. Um sie für eine Klassierung genügend deutlich erkennen zu können, betrachtet der Prüfer die Oberfläche der Probe und versucht, in Reflexion über die Oberfläche zusätzlich eine entfernt aufgestellte Lampe mit scharf begrenzter Leuchtfläche in das Gesichtsfeld zu bringen. Aufgrund der Welligkeit fasert die Begrenzungslinie der Lampe für den Prüfer je nach Intensität der Welligkeit verschieden stark auf. Dieser Effekt wird als Beurteilungskriterium herangezogen. Die einzelnen Klassierungsstufen für die Welligkeit werden durch Musterplatten definiert.

Da der Bandumformprozeß nicht unterbrochen werden kann, besteht nur die Möglichkeit, vom Anfang und Ende des bis zu mehreren 1000m langen Bandes Probenteile abzutrennen und diese im Labor zu prüfen. Da die Welligkeit im Bandverlauf schwanken kann, ist damit keine repräsentative Aussage zur Welligkeit für das gesamte Band möglich. Weiterhin gibt es keine Möglichkeit für Korrekturmaßnahmen während des Bearbeitungsprozesses, da entsprechende Informationen nicht rechtzeitig zur Verfügung stehen. Außerdem ist die manuelle Beurteilung der Welligkeit subjektiv mit großen Einflüßen durch unterschiedliche Prüfpersonen und die Tagesform des Einzelnen. Das Aussehen der Oberfläche hängt von verschiedenen Faktoren ab, so daß der Vergleich mit Musterplatten oft problematisch ist. Insgesamt ist die Reproduzierbarkeit der manuellen Klassierung unbefriedigend.

Von daher liegt der Erfindung die Aufgabe zugrunde, ein Verfahren bzw. eine Einrichtung der eingangs genannten Art zu schaffen, das bzw. die frei von subjektiven Einflüssen auch während eines Produktionsprozesses im On-line-Betrieb eine automatische und kontinuierliche Messung der Welligkeit erlaubt.

Nach der Erfindung wird diese Aufgabe durch die in den kennzeichnenden Teilen der Ansprüche 1 und 2 angegebenen Merkmale gelöst.

Die mit der Erfindung erzielten Vorteile sind insbesondere darin zu sehen, daß unabhängig von subjektiven Einflüssen eine reproduzierbare Messung von Oberflächenwelligkeiten im Fertigungsprozeß online möglich ist, wobei z.B. auch leichte Schwingungen bzw. Verkippungen des Bandes, die z.B. während des Dressiervorgangs auftreten, keinerlei Einfluß auf die Messungen ausüben können.

Anhand der schematischen Zeichnung wird eine prinzipielle Anordnung der Erfindung nachfolgend näher erläutert.

Diese Anordnung ist in einem Sensorkopf 1 zusammengefaßt, der wenige Zentimeter über der Bandoberfläche 12 positioniert ist. Das Licht einer Reflektor-Glühlampe 2 leuchtet den Schirm 3 homogen aus. Dieser Schirm 3 besteht aus der Kombination einer Mattscheibe mit einem Streifengitter, so daß die darunter liegende zu prüfende Bandoberfläche 12 von einer Anzahl parallel angeordneter diffus abstrahlender Streifenlichtquellen beleuchtet wird. Diese Anordnung, bestehend aus Lichtquelle 2 und Schirm 3, wird im folgenden 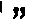 Beleuchtungseinheit" genannt. Über dem Band ist eine Kamera 4 montiert, die mit einem leichten Winkel gegen die Normale auf die Oberfläche ausgerichtet und darauf scharfgestellt ist. Im Gesichtsfeld der Kamera 4 befindet sich als Spiegelung über der Bandoberfläche 12 die oben genannte Beleuchtungseinheit. Dadurch, daß die Kamera 4 auf die Kaltbandoberfläche 12 scharfgestellt ist, zeigen die dahinter liegenden leuchtenden Streifen der Beleuchtungseinheit keine scharfe Begrenzung. Bei geeignet gewählten Abständen und Blendeneinstellungen erhält man auf der Kamera 4 eine dreieckförmige, nahezu 100% durchmodulierte Helligkeitsverteilung quer zu den Gitterlinien der Beleuchtungseinheit.

Alle Punkte auf der Kaltbandoberfläche 12 im Objektfeld der Kamera 4 werden durch den gewählten optischen Aufbau auf die entsprechenden Bildpunkte in der Kameraebene abgebildet. Das dazu benötigte Licht stammt aus einem definierten Bereich der Beleuchtungseinheit, welches über dem ausgewählten Objektpunkt spiegelnd in den zugehörigen Bildpunkt reflektiert wird. Eine durch Welligkeit auf der Kaltbandoberfläche hervorgerufene Oberflächenneigung bewirkt eine Änderung des Bereichs, aus dem von der Beleuchtungseinheit Licht auf den entsprechenden Kamera-Bildpunkt gelangt. Jede Verschiebung des Bereichs auf der Beleuchtungseinheit ist aber mit einer Änderung des Verhältnisses vom dunklen Steganteil zum hellen Spaltanteil und damit einer Änderung der Gesamthelligkeit im Kamerabildpunkt verbunden. Dies gilt für den Anteil der Welligkeiten, die parallel zum Gitter der Beleuchtungseinheit verlaufen. Um den Anteil quer dazu zu erhalten, muß das Gitter entsprechend um 90 Grad gedreht werden. Im Kamerasignal ist die Welligkeitsinformation als Helligkeitsänderung enthalten. Zusätzlich ist das Grundsignal jedoch mit der starken Helligkeitsmodulation durch die gitterförmige Beleuchtungsanordnung überlagert.

Durch eine geeignete Wahl der Parameter:
- Brennweite Kameraobjektiv 5
- Blende Kameraobjektiv 5
- Abstand Kamera-Kaltbandoberfläche 11
- Abstand Beleuchtungseinheit-Kaltbandoberfläche 15
- Spaltbreite des Gitters 13
- Gitterkonstante 14
in Abhängigkeit von den charakteristischen Werten für die Welligkeit
- Wellenlänge
- Amplitude
kann erreicht werden, daß der Kontrast der aufgrund der Welligkeit entstandenen Helligkeitsänderungen genügend groß und ihre Wellenlänge deutlich kleiner als diejenige aufgrund der gitterförmigen Beleuchtungseinheit ist.
Das Kamerasignal gelangt in die Auswerteeinheit 6. Hier wird es von einem Frame-Grabber 7 aufgenommen. Anschließend wird aus dem gespeicherten Bild mit einem digitalen Hochpaßfilter 8 die Welligkeitsinformation extrahiert. Sie liegt als Wechselsignal vor, welches in der letzten Stufe zur betraglichen Mittelwertbildung 9 in das Ausgangssignal 10 umgesetzt. Dieses Augangssignal 10 repräsentiert die gemessene Welligkeit z.B. als Spannungssignal 0 ... 10 V.

Auslegungsbeispiel für Welligkeiten mit Wellenlängen zwischen 100µm und 1000µm und Amplituden von 50nm bis 1000 nm (Spitze-Spitze):
- Abstand Kamera-Bandoberfläche:: 200 mm
- Abstand Beleuchtungseinheit-Bandoberfläche:: 200 mm
- Gitterkonstante:: 20 mm
- Spaltbreite:: 10 mm
- Objektivbrennweite:: 50 mm
- Objektivblendenstufe:: 4

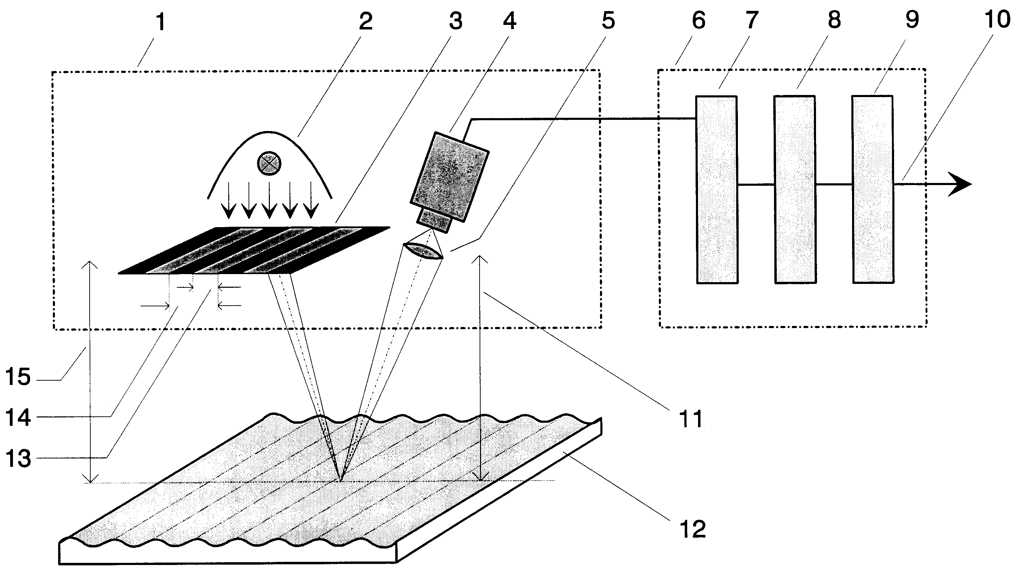

## Patentansprüche

1. Verfahren zum Messen von Oberflächenwelligkeiten an glänzenden ebenen Materialien, bei dem die zu messende Oberfläche mit einer Lichtquelle bestrahlt wird, wobei die von der Oberfläche reflektierten Lichtstrahlungen von einer Kamera aufgenommen und die umgewandelten Bildsignale von einer nachgeschalteten Auswerteeinheit verarbeitet werden und die Lichtstrahlung mindestens einen scharfkantigen und stark kontrastierten Hell-Dunkel-Übergang aufweist und der Hell-Dunkel-Übergang linienförmig ausgebildet ist, wobei der oder die scharfkantigen und stark kontrastierten Hell-Dunkel-Übergänge durch ein zwischen der Lichtquelle und der Oberfläche angeordnetes Streifengitter erzeugt werden, **dadurch gekennzeichnet,** daß die Gitterfreiräume des Streifengitters von einem das Licht der Lichtquelle diffus streuenden Material ausgefüllt sind.

2. Einrichtung zur Durchführung des Verfahrens nach Anspruch 1, bei der eine die von der Oberfläche reflektierten Lichtstrahlen aufnehmende Kamera vorhanden und zwischen der Lichtquelle (2) und der Oberfläche (12) ein Schirm (3) mit streifengitterförmig aufgebrachten lichtundurchlässigen Stegen angeordnet ist, **dadurch gekennzeichnet,** daß die zwischen den lichtundurchlässigen Stegen vorhandenen Gitterfreiräume mit einem das Licht der Lichtquelle diffus streuenden Material ausgefüllt sind und das Objektiv (5) der Kamera (4) so eingestellt ist, daß die Scharfeinstellung im wesentlichen auf die Oberfläche (12) eingerichtet ist, und die Blendeneinstellung am Kameraobjektiv (5) das Strahlenbündel zur Abbildung des betrachteten Punktes auf der Oberfläche (12) in der Ebene des Schirms (3) derart begrenzt, daß der Durchmesser des Strahlenbündels in etwa der Spaltbreite des Gitters (13) entspricht, und bei der die von der Kamera umgewandelten Bildsignale von einer nachgeschalteten Auswerteeinheit verarbeitet werden.
